# EUROPEAN PATENT APPLICATION

(11) **EP 1 188 975 A2**
(43) Date of publication of application: **20.03.2002**
(21) Application number: 01304729.5
(22) Date of filing: 29.05.2001
(51) Int. Cl.: F16K 25/00

(54) **Poppet valve and a method of manufacturing the same**

(30) Priority: 19.09.2000 JP 2000282877
(71) Applicant: FUJI OOZX INC., Fujisawa-shi, Kanagawa-ken (JP)
(72) Inventor: Mori, Akiyoshi, c/o Fuji Oozx Inc., Fujisawa-shi, Kanagawa-ken (JP); Kobayashi, Haruki, c/o Fuji Oozx Inc., Fujisawa-shi, Kanagawa-ken (JP); Kanzaki, Tatsuo, c/o Fuji Oozx Inc., Fujisawa-shi, Kanagawa-ken (JP)
(74) Representative: Harrison Goddard Foote

(57) **Abstract**

A poppet valve is used in an internal combustion engine of an automobile. A valve body (1) which comprises a valve stem (1a) and a valve head (1b) is made of high-strength plastic resin. The valve head is covered with a metal head cover (2), and the end of the valve stem is covered with a cylindrical metal cap (3), thereby decreasing weight of the poppet valve.

## Description

The present invention relates to a poppet valve which is formed from plastics and metal, and a method of manufacturing the same.

A poppet valve which comprises a valve stem and a valve head is generally made of heat resistant steel. Inertial mass of a valve operating mechanism is heavy, which obstructs improvement in engine performance such as increase in engine allowable rotation speed, and save in fuel consumption.

As light poppet valves which solve the disadvantages, a valve head made of metal is combined with a plastic valve stem as disclosed in Japanese Utility Model Pub. No.59-70011; a valve head and the axial end are made of metal and a valve stem is made of plastics as disclosed in Japanese Utility Model Pub. Nos.59-70012 and 60-63012; and a metal valve head is connected to a metal axial end by a metal core which is covered with plastics as disclosed in Japanese Utility Model Pub. No.60-133106.

In the conventional valves, the valve head which has relatively large weight ratio is made of metal and the whole weight of the valve is not so much decreased. The end or core made of metal does not decrease the whole weight. Further, the valve head and the axial end made of metal are connected to the plastic valve stem by screws. Thus, bonding strength is not so high, and durability and reliability of the valve are decreased.

### SUMMARY OF THE INVENTION

In view of the disadvantages in the prior art, it is a principal object of the present invention to provide a poppet valve which comprises plastics partially covered with metal to lighten whole weight and increasing bonding strength between metal and plastics to increase reliability and durability.

It is another object of the present invention to provide a method of manufacturing the poppet valve as above.

According to one aspect of the present invention, there is provided a poppet valve which comprises:
a valve body which comprises a valve stem and a valve head, the valve body made of high-strength plastic resin;
a metal head cover with which the valve head is covered; and
a cylindrical metal cap with which an end of the valve stem opposite to the valve head is covered

The poppet valve is decreased in weight and a valve-operating mechanism is lightened.

According to another aspect of the present invention, there is provided a method of manufacturing a poppet valve, the method comprising the steps of:
providing two dies which are separated from each other;
putting a cylindrical metal cap and a metal head cover into each axial end of the two dies;
putting the two dies together to form a molding chamber between the two dies;
filling high-strength plastic material into the molding chamber;
solidifying the plastic material to form a poppet valve in which a valve head and an end of a valve stem are covered with the head metal cover and the cylindrical metal cap respectively; and
taking the poppet valve out of the dies which are separated from each other.

### BRIEF DESCRIPTION OF THE DRAWINGS

The features and advantages of the invention will become more apparent from the following description with respect to embodiments as shown in accompanying drawings wherein:
Fig. 1 is a central vertical sectional front view of the first embodiment of a poppet valve according to the present invention;
Fig. 2 is a vertical sectional front view of a mold for forming the poppet valve in Fig. 1;
Fig. 3 is a vertical sectional front view of a molding chamber of the mold which includes a head cover and a cylindrical cap to show how to manufacture the poppet valve;
Fig. 4 is a vertical sectional front view of the molding chamber in which plastic material is filled;
Fig. 5 is a central vertical sectional front view of the second embodiment of a poppet valve according to the present invention;
Fig. 6 is a vertical sectional front view of a molding chamber in which a head cover and a cylindrical cap are inserted to show how to manufacture of the poppet valve in Fig. 5;
Fig. 7 is a vertical sectional view of the molding chamber in which plastic material is filled; and
Fig. 8 is a central vertical sectional front view of the third embodiment of a poppet valve according to the present invention.

### DETAILED DESCRIPTION OF PREFERRED EMBODIMENTS

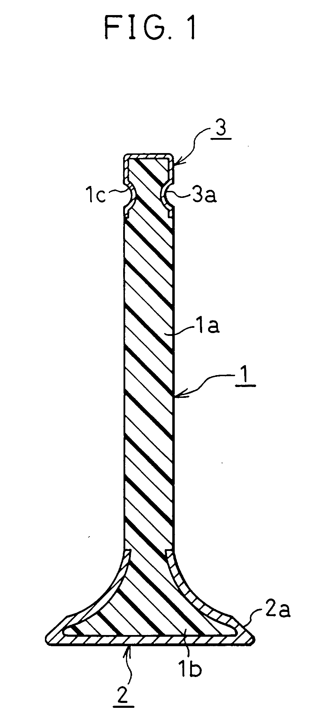

Fig. 1 illustrates the first embodiment of a poppet valve according to the present invention, in which a valve body 1 which comprises a valve stem 1a and a valve head 1b at the end thereof is made of high-strength plastic resins such as polyamide, polyimide, polyacetal, polycarbonate, unsaturated polyester, heat-resistant phenol, epoxy and ultra-high-molecular polyethylene, and fiber reinforced plastics in which one or more of glass, carbon, aramid and ceramic whisker fibers are mixed to any one of the above plastic resins. Preferably, the valve body 1 may be made of polyamide-imide resin, polyamide resin and heat-resistant phenol resin reinforced by carbon, aramid or glass fiber.

On the outer circumferential surface of the valve head 1b of the valve body 1, a metal head cover 2 which has a tapered valve face on the lower outer circumferential surface is engaged, the upper end of the head cover 2 being equal in external diameter to the valve stem 1a.

The head cover 2 may be made of heat-resistant steel or Ti alloy as exhaust valve, and of Al alloy as intake valve which has low thermal load.

At the upper end of the valve stem 1a, a cylindrical cap 3 which is equal to the valve stem 1a in external diameter is engaged to fit with an annular groove 1c of the outer circumferential surface of the valve stem 1a so that the cap 3 may not be detached. An annular groove of the cylindrical cap 3 may be also used to engage with a cotter (not shown). The cylindrical cap 3 is made of carbon steel, tool steel, Ti alloy or Al alloy.

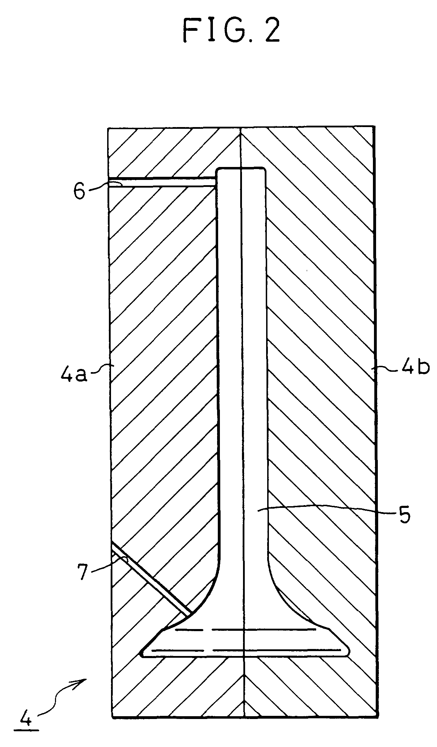

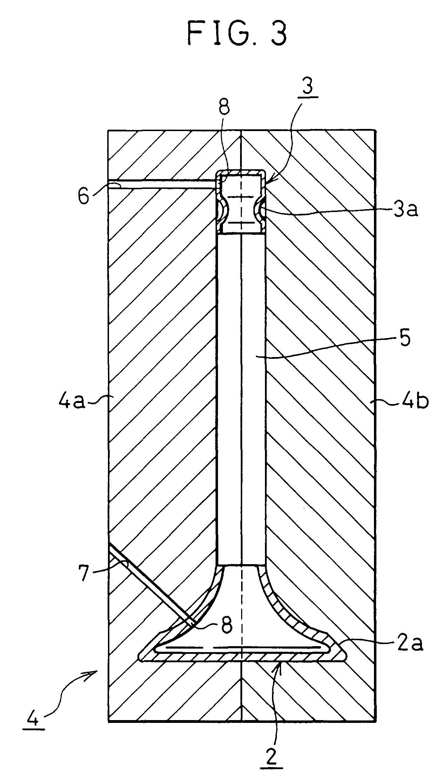

Figs. 2 to 4 illustrate how to manufacture the poppet valve as above.

Fig. 2 shows an injection mold 4 which comprises a stationary die 4a and a moving die 4b which can be divided along an axis, and a molding chamber 5 which is the same in shape as the poppet valve is formed to be symmetrical with respect to the contact surface of the dies 4a and 4b. In the upper and lower portions of the stationary die 4, an inlet 6 and an outlet 7 which are connected to resin injection nozzles (not shown) of an injection molding machine are formed to communicate with the chamber 5,

While the moving die 4b is moved from the stationary die 4a, the head cover 2 formerly molded by deep drawing and the cylindrical cap 3 which is formed with the annular groove 3a on the outer circumferential surface are inserted into the upper and lower portions of the molding chamber 5, and the moving die 4b is moved back. Then, the molding chamber 5 is hermetically closed.

The head cover 3 and the cylindrical cap 3 are inserted into the molding chamber 5 so that bores 8,8 already formed may communicate with the inlet 6 and the outlet 7.

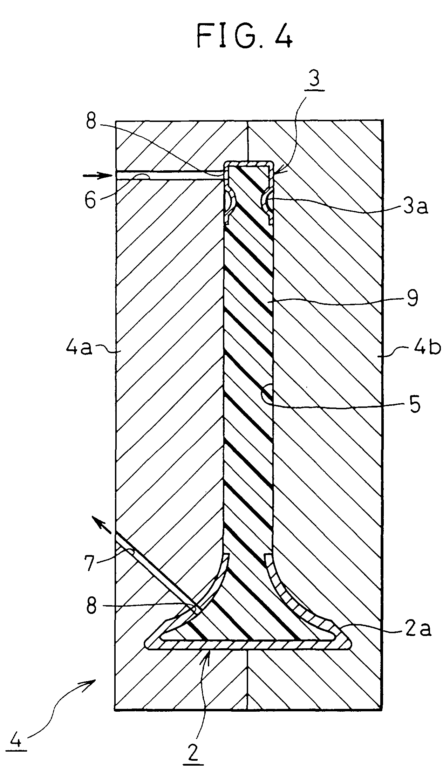

Then, as shown in Fig. 4, plastic material 9 which is melted and fluidized by the injection molding machine is filled into the molding chamber 6 through the inlet 6. When it is filled, air in the chamber 5 is discharged to the outside through the outlet 7.

Then, if the material 9 is thermoplastic resin, it is solidified by cooling the die 4, and if it is thermosetting resin, it is solidified by warming the die to suitable temperature.

Finally, the moving die 4b is moved and the mold 4 is opened. The solidified material 9 is taken out to form a poppet valve as shown in Fig. 1.

In the poppet valve as formed by such method and shown in Fig. 1, the plastic material 9b is flowed into a space between the head cover 2 and cylindrical cap 3 already inserted in the molding chamber 5 and solidified to bind the plastic valve body 1, head cover 2 and cylindrical cap 3. Without special binding means, they are easily combined firmly to increase anti-pulling-out strength of the head cover 2 and cylindrical cap 3 from the valve body 1 significantly.

To fix the head cover 2 and the cylindrical cap 3 to the valve head 1b and the valve stem 1a after the valve molding material 1 is formed, it is required to provide drawing or press means. Thus the number of steps and manufacturing cost are increased and errors are liable to occur.

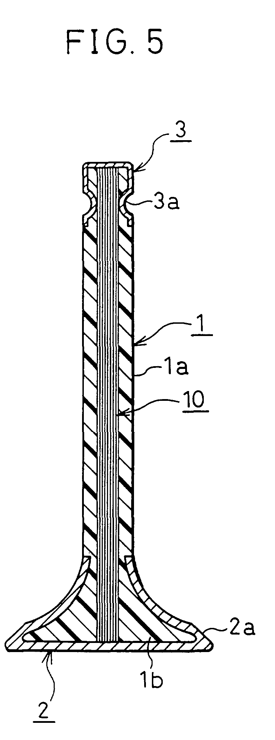

Fig. 5 illustrates the second embodiment of a poppet valve according to the present invention. Being different from the first embodiment, a long fiber bundle of glass fibers, carbon fibers and aramid fibers (Kevlar) are embedded over the whole length in the center of the valve body 1.

A single fiber of the long fiber bundle 10 may have 0.1 to 0.3 mm in diameter in view of tensile strength and weight, and the ratio of the valve stem 1a to the bundle 10 in diameter may be about 1.5 to 2.0. The long fiber bundle 10 increases strength of the valve body, especially tensile strength and bending strength significantly.

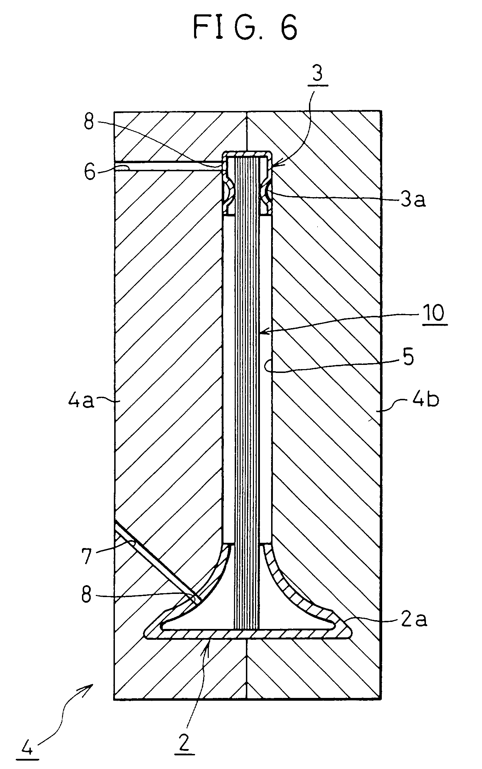

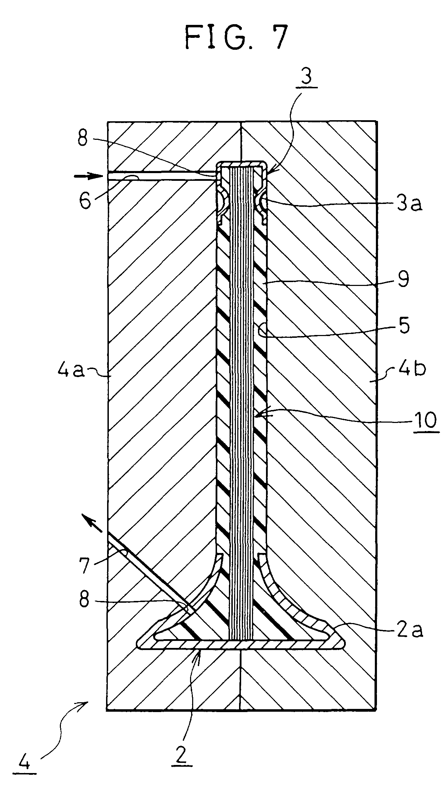

Figs. 6 and 7 illustrate how to manufacture the poppet valve in the second embodiment. As shown in Fig. 6, according to similar way to the above, a head cover 2 and a cylindrical cap 3 are inserted in a molding chamber 5 with the long fiber bundle 10. The upper end of the long fiber bundle 10 may be held in a constriction formed by an annular groove 3a of the cylindrical cap 3. The long fiber bundle 10 may be formerly immersed in a plastic material which is the same as that of the valve body 1 to solidify as a single flexible rod, thereby facilitating insertion into the head cover 2 and the cylindrical cap 3, and avoiding possibility of central deviation of the long fiber bundle 10 in the molding chamber 5.

Then, as shown in Fig. 7, plastic material 9 is filled into the molding chamber 5 through an inlet 6. The filled material 9 is invaded between the fibers of the long fiber bundle 10. When the long fiber bundle 10 is solidified with immersion of thermoplastic material, it is melted again right after the material 9 is filled. Therefore, the long fiber bundle 10 is not deviated during filling of the material 9, or each single fiber does not loosen.

Then, after the material 9 is solidified, it is taken out of the mold to obtain a poppet valve in Fig. 5. Thus, the high-strength poppet valve in which the long fiber bundle 10 is embedded in the center of the valve body 1 can be easily manufactured.

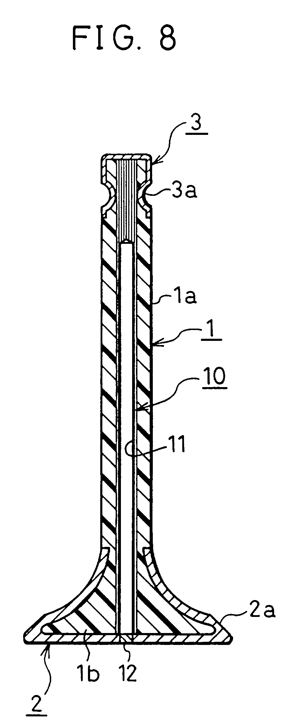

Fig. 8 illustrates the third embodiment of the present invention, in which a bore 11 which has smaller in diameter than an external diameter of a long fiber bundle 10 is formed at the center from the lower end of a valve head 1b of a poppet valve to the axial end. After the poppet valve is formed by the foregoing way, a gun drill is entered from the lower end of a head cover 2 to form the bore 11, and an opening of the head cover 2 is tightly closed by a closing plate 12. By formation of the bore 11, the poppet valve can be lightened. The long fiber bundle 10 is partially left on the inner circumferential surface of the bore. Therefore, strength of the poppet valve is not so decreased even if the bore 11 is formed.

As described above, in the foregoing poppet valve, the valve body 1 is made of plastics, and the metal head cover 2 and the cylindrical cap 3 are fixed to the valve head 1b and the axial end which has a cotter fitting portion for which heat resistance, strength and wear resistance are especially required. Thus, it can be significantly lightened compared with a conventional poppet valve in which the valve head and the axial end are made of metal.

The head cover 2 and the cylindrical cap 3 can be united with forming of the valve body 1. Thus, high bonding strength of the valve body 1 can be achieved to increase durability and reliability.

The poppet valve is manufactured by injection molding, but may be molded by casting.

If the plastic material comprises thermosetting resin, a molding chamber is filled with powder or chips, which are molded under pressure together with thermal fluidization.

If strength of the valve stem is not so required, the bore 11 in Fig. 8 may be formed in the poppet valve in Fig. 1 which does not contain the long fiber bundle 10.

To employ it as exhaust valve, the end of the head cover 2 is extended to the lower end of a valve guide (not shown) of a cylinder head, so that the plastic valve stem 1a is not directly exposed to a high temperature exhaust gas.

In the foregoing embodiment, a number of fibers are bound to form the long fiber bundle 10 which are embedded, but fibers may be embedded without binding.

The plastic material may be embedded to the middle or lower end portion of the molding chamber without reaching to the upper end. In this case, gas discharge bores may be formed at upper and lower points, or only at the upper end.

The die 4 may be horizontally provided for molding.

The foregoing merely relate to embodiments of the present invention. Various changes and modifications may be made by persons skilled in the art without departing from the scope of claims wherein:

## Claims

1. A poppet valve which comprises:
a valve body which comprises a valve stem and a valve head, the valve body made of high-strength plastic resin;
a metal head cover with which the valve head is covered; and
a cylindrical metal cap with which an end of the valve stem opposite to the valve head is covered.

2. A poppet valve as claimed in claim 1 wherein the high-strength plastic resin is selected from polyamide, polyimide, polyacetal, polycarbonate, unsaturated polyester, heat-resistant phenol, epoxy and ultra-high-molecular polyethylene.

3. A poppet valve as claimed in claim 1 wherein the high-strength plastic resin comprises fiber reinforced plastics.

4. A poppet valve as claimed in claim 3 wherein the fiber is selected from glass, carbon, aramid and ceramic whisker fibers.

5. A poppet valve as claimed in claim 3 wherein the valve body is made of one of polyamide-imide resin, polyimide resin and heat-resistant phenol resin reinforced by carbon, aramid or glass fiber.

6. A poppet valve as claimed in any of the preceding claims wherein an opening ends of the cylindrical cap and the head cover are equal to the valve stem in external diameter, so that the metal cap and the head cover are smoothly connected to the valve stem on an outer circumferential surface.

7. A poppet valve as claimed in any of the preceding claims wherein the cylindrical metal cap is made of tool steel, Ti alloy or Al alloy.

8. A poppet valve as claimed in any of the preceding claims wherein the metal head cover is made of heat-resistant steel, Ti alloy and Al alloy.

9. A poppet valve as claimed in claim 3 wherein a long fiber bundle which comprises a number of long reinforcing fibers are embedded along an axis of the valve body.

10. A poppet valve as claimed in claim 9 wherein a bore is formed around an axis of the valve body, the long fiber bundle extending on an inner circumferential surface of the bore.

11. A poppet valve as claimed in claim 1 wherein the cylindrical metal cap has an annular groove on an outer circumferential surface, the annular grove being engaged in an annular groove of the valve stem to be engaged with a cotter so that the cap may not be removed from the valve stem.

12. A method of manufacturing a poppet valve, the method comprising the steps of:
providing two dies which are separated from each other;
putting a cylindrical metal cap and a metal head cover into each axial end between the two dies;
putting the two dies together to form a molding chamber between the two dies;
filling high-strength plastic material into the molding chamber;
solidifying the plastic material to form a poppet valve in which a valve head and an end of a valve stem are covered with the head metal cover and the cylindrical metal cap respectively; and
taking the poppet valve out of the dies which are separated from each other.
